# EUROPEAN PATENT APPLICATION

(11) **EP 4 506 479 A1**
(43) Date of publication of application: **12.02.2025**
(21) Application number: 23795361.7
(22) Date of filing: 24.04.2023
(51) Int. Cl.: C22C 21/00, C22F 1/04, C21D 8/10, F28F 21/08, F28F 1/02

(54) **ALUMINUM ALLOY CORE MATERIAL FOR HEAT EXCHANGER, AND HEAT EXCHANGE TUBE AND HEAT EXCHANGER ADOPTING SAME**

(30) Priority: 25.04.2022 CN 202210444325
(71) Applicant: Sanhua (Hangzhou) Micro Channel Heat Exchanger Co. Ltd, Zhejiang 310018 (CN)
(72) Inventor: LIU, Yuzhang, Hangzhou Economic& Technological Development Area Hangzhou, Zhejiang 310018 (CN); ZHOU, Han, Hangzhou Economic& Technological Development Area Hangzhou, Zhejiang 310018 (CN); ZUO, Yuke, Hangzhou Economic& Technological Development Area Hangzhou, Zhejiang 310018 (CN); WANG, Chuanting, Hangzhou Economic& Technological Development Area Hangzhou, Zhejiang 310018 (CN); MA, Qiongtong, Hangzhou Economic& Technological Development Area Hangzhou, Zhejiang 310018 (CN); LI, Dandan, Hangzhou Economic& Technological Development Area Hangzhou, Zhejiang 310018 (CN)
(74) Representative: Hautier IP - MC/EP
(86) International application number: PCT/CN2023/090444
(87) International publication number: WO 2023/207928

(57) **Abstract**

An aluminum alloy core material for heat exchanger, and a heat exchange tube and a heat exchanger using the same provided. The aluminum alloy core material includes an aluminum alloy material, and the aluminum alloy material includes, Mn: 0.20%-1.20%, Fe: 0.08%-0.25%, Ti: 0.08%-0.25%, Si: 0.03%-0.12%, Cu: 0%-0.35%, Zn: 0%-3.0%, Zr: 0%-0.4%, V: 0%-0.4%, Cr: 0%-0.5%, and RE: 0%-0.5%, and a remainder of aluminum and inevitable impurities, where RE is a rare earth element.

## Description

### CROSS-REFERENCE TO RELATED APPLICATIONS

The present application claims the benefit of priority to Chinese patent application No. 202210444325.3, filed on April 25, 2022, which is hereby incorporated by reference in its entirety.

### TECHNICAL FIELD

The present disclosure relates to technical field of heat exchange and, in particular, to an aluminum alloy core material for heat exchanger, and a heat exchange tube and a heat exchanger using the same.

### BACKGROUND

In application of a heat exchanger for heat exchange with air, corrosion resistance of heat exchange tube in air not only affects heat exchange performance of the heat exchanger, but also relates to service life of the heat exchanger, which is an important index for reliability of the heat exchange tube. In the related art, during usage of heat exchanger, outside of aluminum alloy heat exchange tube is exposed to a corrosive environment, as a result, local corrosion occur in the heat exchange tube, which may leak refrigerant from the heat exchanger, and affect service life of the heat exchanger.

### SUMMARY

Therefore, an aspect of the present disclosure provides an aluminum alloy core material for heat exchanger, and a heat exchange tube using the aluminum alloy core material. The heat exchange tube using the aluminum alloy core material is beneficial to improve corrosion resistance of the heat exchange tube, and the heat exchange tube is applied to a heat exchanger, which is beneficial to prolong service life of the heat exchanger.

Another aspect of the present disclosure further provides a heat exchanger.

An embodiment of the first aspect of the present disclosure provides an aluminum alloy core material for heat exchanger, including an aluminum alloy material. The aluminum alloy material includes, by mass percentage, Mn: 0.20%-1.20%, Fe: 0.08%-0.25%, Ti: 0.08%-0.25%, Si: 0.03%-0.12%, Cu: 0%-0.35%, Zn: 0%-3.0%, Zr: 0%-0.4%, V: 0%-0.4%, Cr: 0%-0.5%, and RE: 0%-0.5%, and a remainder of aluminum and inevitable impurities, where RE is a rare earth element. The aluminum alloy core material includes a plurality of first unit bodies, a plurality of second unit bodies, and a plurality of third unit bodies. The first unit bodies, the second unit bodies and the third unit bodies have the same volumes. An average value of Ti content of the first unit body is greater than or equal to 4 times of a nominal value of Ti content of the aluminum alloy core material. An average value of Ti content of the second unit body is less than 0.02%. An average value of Ti content of the third unit body is greater than the average value of Ti content of the second unit body and less than the average value of Ti content of the first unit body.

In an embodiment of the present disclosure, the aluminum alloy core material includes a plurality of aluminum matrix solid solutions with high Ti content and a plurality of aluminum matrix solid solutions with low Ti content. It can be understood that the aluminum matrix solid solution with high Ti content refers to one or more continuous first unit bodies, and the aluminum matrix solid solution with low Ti content refers to one or more continuous second unit bodies.

The aluminum alloy core material for heat exchanger according to an embodiment of the present disclosure has the following beneficial effects. The aluminum alloy core material for heat exchanger according to an embodiment of the present disclosure includes the aluminum matrix solid solution with high Ti content and the aluminum matrix solid solution with low Ti content, where an average value of Ti content of the aluminum matrix solid solution with high Ti content is greater than or equal to 4 times of a nominal value of Ti content of the aluminum alloy core material, and an average value of Ti content of the aluminum matrix solid solution with low Ti content is less than 0.02%. Due to difference in microscopic composition, a difference in microscopic corrosion potential is formed to be great enough, which can be particularly reserved in hot processing (such as shaping tube by hot extrusion, heat exchanger braze-welding, and so on) and finally alternately distributed in striped shape in thickness direction of the heat exchange tube. The corrosion form is in striped shape, so as to restrain corrosion in thickness direction of the heat exchange tube and thus improve pitting corrosion resistance of the heat exchange tube.

In some embodiments, orthographic projections of the first unit body and at least one second unit body on first plane or second plane at least partially overlap, where the first plane is parallel to horizontal plane, and the second plane has an angle α with the first plane, where 0°< α ≤ 90°.

In some embodiments, a content of Ti in the aluminum alloy material is, by mass percentage, 0.10%-0.20%, more preferably: 0.14-0.18%.

In some embodiments, a content of Cu in the aluminum alloy material is, by mass percentage, 0% < Cu ≤ 0.35%.

In some embodiments, a content of Zn in the aluminum alloy material is, by mass percentage, 0% < Zn ≤ 3.0%.

In some embodiments, a content of Zr in the aluminum alloy material is, by mass percentage, 0% < Zr ≤ 0.4%.

In some embodiments, a content of V in the aluminum alloy material is, by mass percentage, 0% < V ≤ 0.4%.

In some embodiments, a content of Cr in the aluminum alloy material is, by mass percentage, 0% < Cr ≤ 0.5%.

In some embodiments, a content of RE in the aluminum alloy material is, by mass percentage, 0% < RE ≤ 0.5%.

In some embodiments, in the aluminum alloy material, by mass percentage, single element content of the inevitable impurity elements is ≤ 0.05%, and total content of the inevitable impurity elements is ≤ 0.15%.

In some embodiments, in grain structure of the aluminum alloy core material, a proportion of equiaxed grain is greater than or equal to 90% by number, and in the equiaxed grain, at least 40% grain have a maximum size greater than 100 µm. Grain size of the aluminum alloy core material affects pitting corrosion resistance of the tube material during subsequent processes. Therefore, in the embodiments of the present disclosure, the aluminum alloy core materials includes mainly the equiaxed grain, and its grain size is concentrated in 100 microns level, where a proportion of grain with a size larger than 100 µm exceeds 40% by grain number.

In some embodiments, there is a dispersed second phase particle mixed in the aluminum alloy core material, and at least 90% by number of the second phase particle has a maximum size less than 15 µm. Mn, Fe, Si, Ti and impurity elements in aluminum alloy material form the second phase particle in the aluminum alloy core material. The dispersed second phase particle can effectively improve strength of the aluminum alloy core material, but second phase particle with an excessively large size reduces extrusion processing performance of the aluminum alloy core material. Taking all factors into consideration, at least 90% (by number) of the second phase particle of the aluminum alloy core material according to the embodiments of the present disclosure has a maximum size of less than 15 µm.

Another aspect of embodiments of the present disclosure provides a method for preparing the above aluminum alloy core material for heat exchanger, including: providing materials for the above aluminum alloy material depending on components and weight percentages thereof; and carrying out semi-continuous ingot casting and homogenization to obtain the aluminum alloy core material, where the homogenization has a temperature of 550°C-630°C and a duration of 1h-8h. Preferably, the homogenization has a temperature of 580°C-620 °C and a duration of 4h-6h.

The method for preparing the aluminum alloy core material for heat exchanger according to embodiments of the present disclosure has the following beneficial effects. By controlling components and their mass percentages of alloy elements, and the temperature and the duration of the homogenization, the prepared aluminum alloy core material includes the aluminum matrix solid solution with high Ti content and the aluminum matrix solid solution with low Ti content, where the average value of Ti content of the aluminum matrix solid solution with high Ti content is greater than or equal to 4 times of the nominal value of Ti content of the aluminum alloy core material, and the average value of Ti content of the aluminum matrix solid solution with low Ti content is less than 0.02%. A great difference distribution of the Ti content is the foundation of the pitting corrosion resistance effect of the tube material prepared by hot extruded tube according to the present disclosure.

In some embodiments, a method for preparing the aluminum alloy core material for heat exchanger includes: providing materials for the aluminum alloy material depending on components and weight percentages thereof; placing into a smelting furnace for smelting at a temperature of 750°C-780°C; refining in a standing furnace at a temperature of 740°C-750°C, where high-purity Ar is adopted for degassing to control a content of liquid hydrogen of the aluminum alloy liquid to be 0.13ml/100g or less (preferably 0.10 ml/100g or less), and an Al-5Ti-1B grain refiner is added for 0.01% to 0.03% by mass of the aluminum alloy liquid; carrying out two-stage filtering and casting, where the casting has a temperature of 705°C-715°C; and homogenizing at a temperature of 550°C-630°C for a duration of 1h-8h.

An aspect of embodiments of the present disclosure further provides a heat exchange tube, including a tube wall and at least one heat exchange channel. The heat exchange channel extends in length direction of the heat exchange tube. The tube wall surrounding the heat exchange channel has a core material including the above aluminum alloy core material.

According to an embodiment of the present disclosure, the aluminum matrix solid solution with high Ti content and the aluminum matrix solid solution with low Ti content alternately distributed in the aluminum alloy core material, which, after a heat exchange tube is prepared by processing, form strips substantially parallel to direction of the tube wall, and are alternately distributed in thickness direction of the tube wall.

The heat exchange tube according to an embodiment of the present disclosure has the following beneficial effects. After hot extrusion, the aluminum matrix solid solution with high Ti content and the aluminum matrix solid solution with low Ti content which are alternately distributed in the original aluminum alloy core material form strips parallel to direction of the tube wall, which generate microscopically an alternately distributed potential gradient in the tube wall. Such alternately distributed potential gradient can limit corrosion to in a low potential strip. Only when the low potential strip has been consumed, the corrosion will break through a high potential strip, and expand into the tube. Thus the pitting corrosion resistance of the heat exchange tube is effectively improved.

In some embodiments, the heat exchange tube is prepared from the above aluminum alloy core material by a method including an extrusion process, where an extrusion ratio of the extrusion process is greater than or equal to 50. When the heat exchange tube is a microchannel flat tube, the extrusion ratio is greater than or equal to 150. In order to better crush and disperse the second phase particles, and to make microstructure of the tube material compact, the extrusion ratio of the extrusion process needs to be greater than or equal to 50, and the extrusion ratio is preferably greater than or equal to 150 as extruding the microchannel flat tube.

In some embodiments, the heat exchange tube includes a solder layer, where the solder layer is an Al-Si matrix alloy, the solder layer forms a diffusion layer by silicon diffusion during braze-welding, and a thickness of the diffusion layer is less than or equal to 20% of a thickness of the tube wall.

In a heat exchanger product with welding structure, during brazing process, Si element in the solder layer diffuses to the heat exchange tube, and meanwhile base material of the heat exchange tube is locally melted. Especially, the diffusion of Si at grain boundary of the heat exchange tube is faster than that at non-grain boundary. The diffusion of Si into the tube changes composition of the tube material, especially at the grain boundary of the tube material with more Si diffusion, which has an adverse influence on corrosion resistance of the tube material. In order to reduce this adverse influence, it is necessary to effectively control diffusion depth of Si of the solder layer into the tube material, preferably not exceeding 20% of thickness of the tube wall of the heat exchange tube.

Another aspect of embodiments of the present disclosure further provides a heat exchanger including the above heat exchange tube.

The heat exchanger according to embodiments of the present disclosure has the following beneficial effects. Due to usage of the above heat exchange tube, service life of the heat exchanger is greatly prolonged.

In some embodiments, the heat exchanger includes:
a first tube and a second tube; and .
a heat exchange tube, where a plurality of heat exchange tubes are arranged at intervals in length direction of the first tube, the heat exchange tube includes a heat exchange channel extending in length direction thereof, a plurality of heat exchange channels are arranged at intervals in width direction of the heat exchange tube, the heat exchange tube is directly or indirectly connected with the first tube, and the heat exchange tube is directly or indirectly connected with the second tube.

In some embodiments, the heat exchanger further includes a fin.

The fin is connected with the heat exchange tube, part of fins are arranged between two adjacent heat exchange tubes in length direction of the first tube, and there are a plurality of fins.

A material of the fin is aluminum alloy, and a corrosion potential of the fin is not higher than that of the heat exchange tube.

In some embodiments, surface of the heat exchange tube is arc-sprayed with zinc or precoated with flux containing zinc. Adding Zn element to aluminum alloy reduces corrosion potential of the aluminum alloy. Due to a large solid solubility of Zn in aluminum alloy, Zn, excepting to react with other alloying element to form a second phase, usually exists in form of solid solution in the aluminum alloy. If the solid solution Zn presents a distribution from high to low concentration from surface layer to inner layer of the heat exchange tube, a corrosion potential distribution from low to high would be presented from the surface layer to the inner layer of the heat exchange tube. Such distribution can effectively improve pitting corrosion resistance of the aluminum alloy heat exchange tube. During welding and heating, the zinc preset on surface of the heat exchange tube diffuses from surface to the interior to form a concentration gradient, so as to effectively prolong corrosion resistance life of the heat exchange tube.

The aluminum alloy core material for heat exchanger includes the aluminum matrix solid solution with high Ti content and the aluminum matrix solid solution with low Ti content. Due to difference in microscopic composition, a difference in microscopic corrosion potential is formed to be great enough, which can be particularly reserved in hot processing (such as shaping tube by hot extrusion, heat exchanger braze-welding, and so on) and finally alternately distributed in striped shape in thickness direction of the heat exchange tube. The corrosion form is in striped shape, so as to restrain corrosion in thickness direction of the heat exchange tube and thus improve pitting corrosion resistance of the tube material.

In the heat exchange tube for the heat exchanger of embodiments of the present disclosure, an aluminum alloy core material with excellent extrusion performance and corrosion resistance is adopted, and the prepared heat exchange tube has excellent corrosion resistance, and still has high corrosion resistance without adding a zinc spraying coating, and has high strength.

In the heat exchanger of embodiments of the present disclosure, due to adopting the heat exchange tube according to embodiments of the present disclosure, service life of the heat exchanger is significantly prolonged.

### BRIEF DESCRIPTION OF DRAWINGS

FIG. 1a is a SEM image of grains at center of the homogenized ingot in Example 1;
FIG. 1b is a SEM image of grains at radial 1/4 of the homogenized ingot in Example 1;
FIG. 1c is a SEM image of second phase particles at center of the homogenized ingot in Example 1;
FIG. 1d is a SEM image of second phase particles at radial 1/4 of the homogenized ingot in Example 1;
FIG. 1e is an EDS image of Ti element content at center of the homogenized ingot in Example 1;
FIG. 1f is an EDS image of Ti element content at radial 1/4 of the homogenized ingot in Example 1;
FIG. 2a is a SEM image of grains of the extruded tube in Example 1;
FIG. 2b is a SEM image of second phase particles of the extruded tube in Example 1;
FIG. 3a shows a typical corrosion morphology of the simulated braze-welded zinc-sprayed tube prepared in Example 1 after SWAAT for 4000h;
FIG. 3b shows a typical corrosion morphology of the zinc-sprayed tube prepared in Example 1 after SWAAT for 3000h;
FIG. 3c shows a typical corrosion morphology of the zinc-free tube prepared in Example 1 after SWAAT for 4000h;
FIG. 4a is a SEM image of grains at center of the homogenized ingot in Example 2;
FIG. 4b is a SEM image of grains at radial 1/4 of the homogenized ingot in Example 2;
FIG. 4c is a SEM image of second phase particles at center of the homogenized ingot in Example 2;
FIG. 4d is a SEM image of second phase particles at radial 1/4 of the homogenized ingot in Example 2;
FIG. 4e is an EDS image of Ti element content at center of the homogenized ingot in Example 2;
FIG. 4f is an EDS image of Ti element content at radial 1/4 of the homogenized ingot in Example 2;
FIG. 5a is a SEM image of grains of the extruded tube in Example 2;
FIG. 5b is a SEM image of second phase particles of the extruded tube in Example 2;
FIG. 6a shows a typical corrosion morphology of the simulated braze-welded zinc-sprayed tube prepared in Example 2 after SWAAT for 4000h;
FIG. 6b shows a typical corrosion morphology of the extruded tube (zinc-free tube) prepared in Example 2 after SWAAT for 2000h;
FIG. 7a is a SEM image of grains at center of the homogenized ingot in Example 4;
FIG. 7b is a SEM image of grains at radial 1/4 of the homogenized ingot in Example 4;
FIG. 7c is a SEM image of second phase particles at center of the homogenized ingot in Example 4;
FIG. 7d is a SEM image of second phase particles at the radial 1/4 of the homogenized ingot in Example 4;
FIG. 7e is an EDS image of Ti element content at center of the homogenized ingot in Example 4;
FIG. 7f is an EDS image of Ti element content at radial 1/4 of the homogenized ingot in Example 4;
FIG. 8a is a SEM image of grains of the extruded tube in Example 4;
FIG. 8b is a SEM image of second phase particles of the extruded tube in Example 4;
FIG. 9a shows a typical corrosion morphology of the zinc-sprayed tube prepared in Example 4 after SWAAT for 4000h;
FIG. 9b shows a typical corrosion morphology of the zinc-sprayed tube prepared in Example 4 after SWAAT for 6000h;
FIG. 10 is a schematic structural diagram of a heat exchanger according to an embodiment of the present disclosure; and
FIG. 11 shows diffusion of Si element of a typical flat tube in a position closed to a collecting tube of finless region between the collecting tube and the fin on the cores of heat exchangers VI and VII detected by SEM&EDS.

### DETAILED DESCRIPTION OF EMBODIMENTS

The embodiments of the present disclosure are described in detail below, and the embodiments described below are exemplary and intended to explain the present disclosure, and cannot be construed as limiting the present disclosure.

In the present disclosure, corrosion resistance refers to comprehensive corrosion resistance and pitting corrosion resistance of an aluminum alloy in a corrosive environment. The comprehensive corrosion resistance refers to durability for comprehensive corrosion of the aluminum alloy, and the pitting corrosion resistance refers to durability for pitting corrosion of the aluminum alloy. The corrosive environment includes atmospheric and/or water environments, such as an acidic environment, an alkaline environment, a chloride environment, or combination thereof.

In the aluminum alloy core material of embodiments of the present disclosure, in addition to corrosion resistance, for meeting necessary strength and processing and manufacturing properties of components such as tube of the heat exchanger, an element composition and the content thereof need to be designed. Hereinafter, the element composition and content thereof of aluminum alloy material included in the aluminum alloy core material of embodiments of the present disclosure are described. In embodiments of the present disclosure, if not described, the content of any alloy element of the aluminum alloy material according to an embodiment of the present disclosure refers to a mass content.

The aluminum alloy core material according to an embodiment of the present disclosure includes an aluminum alloy material, and the aluminum alloy material includes Mn element. Mn element has a low solid solubility at room temperature in the aluminum alloy core material, and is generally present in a form of Al₆Mn in second phase. Dispersed Al₆Mn particles can effectively improve strength of the aluminum alloy core material. Since a corrosion potential of Al₆Mn is closed to that of pure Al, the added Mn element can improve strength without affecting corrosion resistance. However, increase of Mn content reduces extrusion processing performance of the aluminum alloy core material, thus, an upper limit of Mn content in the aluminum alloy material according to an embodiment of the present disclosure is 1.2%. A certain amount of Mn element can also form an Al-Mn-Fe-Si phase with elements such as Fe, Si, etc., which reduces adverse influence of excessive Fe and Si on corrosion resistance of the aluminum alloy core material. In order to effectively reduce influence of Fe and Si, a lower limit of Mn content in the aluminum alloy material of an embodiment of the present disclosure is 0.2%.

The aluminum alloy material includes Fe element and Si element, which are main impurity elements in an electrolytic aluminum raw material (upper limits of Fe and Si contents in an aluminum ingot Al99.70 for re-melting is 0.10% and 0.20%, respectively) and main alloying elements and strengthening elements of 1-series aluminum alloy. Fe has a low solid solubility in Al matrix. Fe is generally present in a form of intermetallic compound such as Al₃Fe, etc. when exists alone in the Al matrix, which has a good strengthening effect on the aluminum alloy core material. However, a corrosion potential difference between Al₃Fe and Al matrix is large, such that pitting corrosion is easily induced. A small amount of Si is present in a solid solution form in the Al matrix, and has a certain solid solution strengthening effect on the Al matrix. However, Si is an element for improving potential of the aluminum alloy core material, and excessive Si reduces corrosion resistance of the aluminum alloy core material. Although a certain amount of Mn can reduce adverse influence of Fe and Si on corrosion to the aluminum alloy core material to some extent, contents of Fe and Si are still needed to be controlled. Generally, the higher strength of the aluminum alloy core material, the higher pressure required for extrusion processing. In terms of extrusion performance, contents of strengthening elements such as Fe and Si are also needed to be controlled. By comprehensively considering purity grade of an electrolytic aluminum raw material and influence of Fe and Si on corrosion resistance and extrusion performance of the aluminum alloy core material, in the aluminum alloy material according to an embodiment of the present disclosure, a content of Fe is 0.08%-0.25%, and the content of Si is 0.03%-0.12%.

The aluminum alloy material includes Ti element. From binary phase diagram of Al-Ti, Al corner in the phase diagram involves a peritectic reaction. Ti, at a peritectic temperature of 665°C, has a solid solubility of 0.15% in Al, and the Ti exceeding 0.15% forms TiAl₃ intermetallic compound with Al, and Ti, at a high temperature after peritectic reaction, has a maximum equilibrium solid solubility of about 1.3% in aluminum matrix solid solution. This peritectic reaction is a process in which a TiAl₃ solid phase and an Al liquid phase form a new aluminum matrix solid solution solid phase. In an actual casting process, due to insufficient element diffusion, it is usually difficult for the peritectic reaction to completely reach an equilibrium state, so that the aluminum matrix solid solution formed after the reaction has residual TiAl₃ particles. In order to avoid excessive residual of hard TiAl₃ particles from affecting extrusion processing performance of the aluminum alloy core material, an upper limit of Ti content in the aluminum alloy material according to the an embodiment of the present disclosure is 0.25%. While, in the actual casting process, solidification of alloy may deviate from equilibrium composition, due to the presence of heterogeneous nucleation particles such as under a condition of adding grain refiner Al-Ti-B and the like (for example, forming a Ti-rich region and the like near TiB₂ type nucleation particles), and an influence on metallurgical reaction of Ti in Al caused by interaction of different alloy elements (for example, B may reduce critical content of Ti in Al for the peritectic reaction from 0.15% to about 0.01%). A lower limit of Ti content in the aluminum alloy material according to the embodiments of the present disclosure is 0.08%.

A nominal content of Ti in TiAl₃ is 37%. A maximum content of Ti in the aluminum matrix solid solution formed by peritectic reaction at a high temperature is about 1.3%. In the aluminum alloy core material, an aluminum matrix solid solution with high Ti content is formed. In addition to the aluminum matrix solid solution with high Ti content, an aluminum matrix solid solution with low Ti content is also present in the aluminum alloy core material. Due to difference in microscopic composition causing a difference in microscopic corrosion potential, which can be particularly reserved in hot processing (such as homogenizing casted ingot, shaping tube by hot extrusion, and heat exchanger braze-welding, and so on) and alternately distributed in striped shape in thickness direction of hot extruded tube. The corrosion form is in striped shape, so as to restrain corrosion in thickness direction of the hot extruded tube and thus improve pitting corrosion resistance of the tube material. In order to make the prepared tube having a large enough microscopic corrosion potential difference to improve pitting corrosion resistance, Ti content of the aluminum matrix solid solution with high Ti content in the aluminum alloy core material needs to be greater than or equal to 4 times of a nominal content of Ti of the aluminum alloy core material, and Ti content of the aluminum matrix solid solution with low Ti content is less than 0.02%.

In some embodiments, the aluminum alloy material includes Cu element. In order to avert that the added Cu element reacts with Al and other foregoing added alloy elements to form a coarse second phase to affect corrosion resistance of the alloy, the added Cu element needs to have a suitable amount. From binary phase diagram of Al-Cu, Cu, at a high temperature of 548°C, has a maximum solid solubility of 5.65% in Al, and its equilibrium solid solubility decreases with temperature decrease, and is about 0.45% at 300°C, and about 0.1% at room temperature. During solidification and subsequent processing and welding processes of alloy, due to influences of limited high temperature residence time, solidification speed, and the like, Cu usually cannot completely reach an equilibrium state in Al, and it is difficult to form a second phase for precipitation even when there is slight oversaturation. Therefore, an amount of Cu element added in the aluminum alloy material according to an embodiment of the present disclosure is not greater than 0.35%.

In some embodiments, the aluminum alloy material includes Zn element. In order to avert that the added Zn element reacts with Al and other foregoing added alloy element to form a coarse second phase to affect corrosion resistance of the alloy, the added Zn element needs to have a suitable amount. Zn has a maximum solid solubility up to 83.1% in aluminum matrix solid solution at 381°C, and its solid solubility continues decreasing with temperature decrease, and is about 32% at 277°C, and about 5.6% at 125°C. Since Zn has a certain solid solution strengthening effect on Al, and the higher content of Zn reduces extrusion processing performance of the aluminum alloy core material, and considering reduction of corrosion potential of Al by Zn can be better achieved when Zn content is approximately 3.00% or less, an amount of Zn element added in the aluminum alloy material is not greater than 3.00%.

In view of this, an aspect of embodiments of the present disclosure provides an aluminum alloy core material for heat exchanger, including an aluminum alloy material. The aluminum alloy material includes, by mass percentage, Mn: 0.20%-1.20%, Fe: 0.08%-0.25%, Ti: 0.08%-0.25%, Si: 0.03%-0.12%, Cu: 0%-0.35%, Zn: 0%-3.0%, Zr: 0%-0.4%, V: 0%-0.4%, Cr: 0%-0.5%, and RE: 0%-0.5%, and a remainder of aluminum and inevitable impurities, where RE is a rare earth element. The aluminum alloy core material includes a plurality of first unit bodies, a plurality of second unit bodies, and a plurality of third unit bodies. The first unit bodies, the second unit bodies and the third unit bodies have the same volumes. An average value of Ti content of the first unit body is greater than or equal to 4 times of a nominal value of Ti content of the aluminum alloy core material. An average value of Ti content of the second unit body is less than 0.02%. An average value of Ti content of the third unit body is greater than the average value of Ti content of the second unit body and less than the average value of Ti content of the first unit body.

It can be understood that each volumes of the first unit bodies, the second unit bodies, and the third unit bodies are not limited to specific ranges, and any volume region that meets the foregoing condition can be interpreted as an optional volume range of the first unit bodies, the second unit bodies, and the third unit bodies. The volume can also be small enough, for example, the volume can be 1 µm³ to 1000 µm³, such as 1 µm³, 5 µm³, 10 µm³, 20 µm³, 50 µm³, 100µm³, 1000µm³, and so on.

In an embodiment of the present disclosure, the aluminum alloy core material includes a plurality of aluminum matrix solid solutions with high Ti content and a plurality of aluminum matrix solid solutions with low Ti content. It can be understood that the aluminum matrix solid solution with high Ti content refers to one or more continuous first unit bodies, and the aluminum matrix solid solution with low Ti content refers to one or more continuous second unit bodies.

The aluminum alloy core material for heat exchanger according to an embodiment of the present disclosure has the following beneficial effects. The aluminum alloy core material for heat exchanger according to an embodiment of the present disclosure includes the aluminum matrix solid solution with high Ti content and the aluminum matrix solid solution with low Ti content, where an average value of Ti content of the aluminum matrix solid solution with high Ti content is greater than or equal to 4 times of a nominal value of Ti content of the aluminum alloy core material, and an average value of Ti content of the aluminum matrix solid solution with low Ti content is less than 0.02%. Due to difference in microscopic composition, a difference in microscopic corrosion potential is formed to be great enough, which can be particularly reserved in hot processing (such as shaping tube by hot extrusion, heat exchanger braze-welding, and so on) and finally alternately distributed in striped shape in thickness direction of the heat exchange tube. The corrosion form is in striped shape, so as to restrain corrosion in thickness direction of the heat exchange tube and thus improve pitting corrosion resistance of the heat exchange tube.

In some embodiments, orthographic projections of the first unit body and at least one second unit body on first plane or second plane at least partially overlap, where the first plane is parallel to horizontal plane, and the second plane has an angle α with the first plane, where 0°< α ≤ 90°,

In some embodiments, a content of Ti in the aluminum alloy material is, by mass percentage, 0.10%-0.20%, more preferably: 0.14-0.18%.

In some embodiments, a content of Cu in the aluminum alloy material is, by mass percentage, 0% < Cu ≤ 0.35%.

In some embodiments, a content of Zn in the aluminum alloy material is, by mass percentage, 0% < Zn ≤ 3.0%.

In some embodiments, a content of Zr in the aluminum alloy material is, by mass percentage, 0% < Zr ≤ 0.4%.

In some embodiments, a content of V in the aluminum alloy material is, by mass percentage, 0% < V ≤ 0.4%.

In some embodiments, a content of Cr in the aluminum alloy material is, by mass percentage, 0% < Cr ≤ 0.5%.

In some embodiments, a content of RE in the aluminum alloy material is, by mass percentage, 0% < RE ≤ 0.5%.

In some embodiments, in the aluminum alloy material, by mass percentage, single element content of the inevitable impurity elements is ≤ 0.05%, and total content of the inevitable impurity elements is ≤ 0.15%.

In some embodiments, in grain structure of the aluminum alloy core material, a proportion of equiaxed grain is greater than or equal to 90% by number, and in the equiaxed grain, at least 40% grain have a maximum size greater than 100 µm. Grain size of the aluminum alloy core material affects pitting corrosion resistance of the tube material during subsequent processes. Therefore, in the embodiments of the present disclosure, the aluminum alloy core materials includes mainly the equiaxed grain, and its grain size is concentrated in 100 microns level, where a proportion of grain with a size larger than 100 µm exceeds 40% by grain number.

In some embodiments, there is a dispersed second phase particle mixed in the aluminum alloy core material, and at least 90% by number of the second phase particle has a maximum size less than 15 µm. Mn, Fe, Si, Ti and impurity elements in aluminum alloy material form the second phase particle in the aluminum alloy core material. The dispersed second phase particle can effectively improve strength of the aluminum alloy core material, but second phase particle with an excessively large size reduces extrusion processing performance of the aluminum alloy core material. Taking all factors into consideration, at least 90% (by number) of the second phase particle of the aluminum alloy core material according to the embodiments of the present disclosure has a maximum size of less than 15 µm.

Another aspect of embodiments of the present disclosure provides a method for preparing the above aluminum alloy core material for heat exchanger, including: providing materials for the above aluminum alloy material depending on components and weight percentages thereof; and carrying out semi-continuous ingot casting and homogenization to obtain the aluminum alloy core material, where the homogenization has a temperature of 550°C-630°C and a duration of 1h-8h. Preferably, the homogenization has a temperature of 580°C-620 °C and a duration of 4h-6h.

The method for preparing the aluminum alloy core material for heat exchanger according to embodiments of the present disclosure has the following beneficial effects. By controlling components and their mass percentages of alloy elements, and the temperature and the duration of the homogenization, the prepared aluminum alloy core material includes the aluminum matrix solid solution with high Ti content and the aluminum matrix solid solution with low Ti content, where the average value of Ti content of the aluminum matrix solid solution with high Ti content is greater than or equal to 4 times of the nominal value of Ti content of the aluminum alloy core material, and the average value of Ti content of the aluminum matrix solid solution with low Ti content is less than 0.02%. A great difference distribution of the Ti content is the foundation of the pitting corrosion resistance effect of the tube material prepared by hot extruded tube according to the present disclosure.

In some embodiments, a method for preparing the aluminum alloy core material for heat exchanger includes: providing materials for the aluminum alloy material depending on components and weight percentages thereof; placing into a smelting furnace for smelting at a temperature of 750°C-780°C; refining in a standing furnace at a temperature of 740°C-750°C, where high-purity Ar is adopted for degassing to control a content of liquid hydrogen of the aluminum alloy liquid to be 0.13ml/100g or less (preferably 0.10 ml/100g or less), and an Al-5Ti-1B grain refiner is added for 0.01% to 0.03% by mass of the aluminum alloy liquid; carrying out two-stage filtering and casting, where the casting has a temperature of 705°C-715°C; and homogenizing at a temperature of 550°C-630°C for a duration of 1h-8h.

Another aspect of embodiments of the present disclosure further provides a heat exchange tube, including a tube wall and at least one heat exchange channel. The heat exchange channel extends in length direction of the heat exchange tube. The tube wall surrounding the heat exchange channel has a core material including the above aluminum alloy core material.

According to an embodiment of the present disclosure, the aluminum matrix solid solution with high Ti content and the aluminum matrix solid solution with low Ti content alternately distributed in the aluminum alloy core material, which, after a heat exchange tube is prepared by processing, form strips substantially parallel to direction of the tube wall, and are alternately distributed in thickness direction of the tube wall. It can be understood that the alternating distribution at least includes at least partial overlap of projections of the aluminum matrix solid solution with high Ti content and the aluminum matrix solid solution with low Ti content on a projection plane perpendicular to thickness direction of the heat exchange tube.

The heat exchange tube according to an embodiment of the present disclosure has the following beneficial effects. After hot extrusion, the aluminum matrix solid solution with high Ti content and the aluminum matrix solid solution with low Ti content which are alternately distributed in the original aluminum alloy core material form strips parallel to direction of the tube wall, which generate microscopically an alternately distributed potential gradient in the tube wall. Such alternately distributed potential gradient can limit corrosion to in a low potential strip. Only when the low potential strip has been consumed, the corrosion will break through a high potential strip, and expand into the tube. Thus the pitting corrosion resistance of the heat exchange tube is effectively improved.

In some embodiments, the heat exchange tube is prepared from the above aluminum alloy core material by a method including an extrusion process, where an extrusion ratio of the extrusion process is greater than or equal to 50. When the heat exchange tube is a microchannel flat tube, the extrusion ratio is greater than or equal to 150. In order to better crush and disperse the second phase particles, and to make microstructure of the tube material compact, the extrusion ratio of the extrusion process needs to be greater than or equal to 50, and the extrusion ratio is preferably greater than or equal to 150 as extruding the microchannel flat tube.

In some embodiments, the heat exchange tube includes a solder layer, where the solder layer is an Al-Si matrix alloy, the solder layer forms a diffusion layer by silicon diffusion during braze-welding, and a thickness of the diffusion layer is less than or equal to 20% of a thickness of the tube wall.

In a heat exchanger product with welding structure, during brazing process, Si element in the solder layer diffuses to the heat exchange tube, and meanwhile base material of the heat exchange tube is locally melted. Especially, the diffusion of Si at grain boundary of the heat exchange tube is faster than that at non-grain boundary. The diffusion of Si into the tube changes composition of the tube material, especially at the grain boundary of the tube material with more Si diffusion, which has an adverse influence on corrosion resistance of the tube material. In order to reduce this adverse influence, it is necessary to effectively control diffusion depth of Si of the solder layer into the tube material, preferably not exceeding 20% of thickness of the tube wall of the heat exchange tube (generally not exceeding 20 µm).

Another aspect of embodiments of the present disclosure further provides a heat exchanger including the above heat exchange tube.

The heat exchanger according to the embodiments of the present disclosure has the following beneficial effects. Due to usage of the above heat exchange tube, service life of the heat exchanger is greatly prolonged.

In some embodiments, the heat exchanger includes:
a first tube and a second tube; and
a heat exchange tube, where a plurality of heat exchange tubes are arranged at intervals in length direction of the first tube, the heat exchange tube includes a heat exchange channel extending in length direction thereof, a plurality of heat exchange channels are arranged at intervals in width direction of the heat exchange tube, the heat exchange tube is directly or indirectly connected with the first tube, and the heat exchange tube is directly or indirectly connected with the second tube.

In some embodiments, the heat exchanger further includes a fin.

The fin is connected with the heat exchange tube, part of fins are arranged between two adjacent heat exchange tubes in length direction of the first tube, and there are a plurality of fins.

A material of the fin is aluminum alloy, and a corrosion potential of the fin is not higher than that of the heat exchange tube.

In some embodiments, surface of the heat exchange tube is arc-sprayed with zinc or precoated with flux containing zinc. Adding Zn element to aluminum alloy reduces corrosion potential of the aluminum alloy. Due to a large solid solubility of Zn in aluminum alloy, Zn, excepting to react with other alloying element to form a second phase, usually exists in form of solid solution in the aluminum alloy. If the solid solution Zn presents a distribution from high to low concentration from surface layer to inner layer of the heat exchange tube, a corrosion potential distribution from low to high would be presented from the surface layer to the inner layer of the heat exchange tube. Such distribution can effectively improve pitting corrosion resistance of the aluminum alloy heat exchange tube. During welding and heating, the zinc preset on surface of the heat exchange tube diffuses from surface to the interior to form a concentration gradient, so as to effectively prolong corrosion resistance life of the heat exchange tube.

In order to make objectives, technical solutions, and advantages of the embodiments of the present disclosure clearer, the technical solutions of Examples of the present disclosure will be described clearly and completely below. The specific conditions which are not indicated in the specific embodiments are performed according to conventional conditions.

### Example 1

Al99.90, AlFe10, AlMn20 and AlTi10 were used for providing materials depending on mass percentage of the alloy components in Table 1, placed into a smelting furnace for smelting at 750°C-780°C, then refined in a standing furnace at 740°C-750°C, where high-purity Ar was adopted for degassing to control a content of liquid hydrogen of the aluminum alloy liquid to be 0.10ml/100g or less, and an Al-5Ti-1B grain refiner was added for 0.01% to 0.02% by mass of the aluminum alloy liquid. Two-stage filtering and then semi-continuous casting were carried out, with a casting temperature of 705°C-715°C, to obtain an aluminum rod having a diameter of 203 mm. The casted aluminum rod was subjected to homogenization at a temperature of 595°C-605°C for 4h. The homogenized ingot was trimmed its beginning and end off, and cut into a required length. Before extrusion, the ingot was subjected to zoned gradient preheating, at a preheating temperature of 490°C-510°C. At an extrusion die temperature of 460°C-500°C, six-out-of-one hot extrusion processing was carried out with an extrusion output speed of 40m/min-130m/min, to obtain an extruded tube.

### Examples 2 to 9

The alloy components and mass percentages thereof of Examples 2 to 9 are shown in Table 1, in which the alloy element Zn was provided by Zn99.95, and the alloy element Cu was provided by AlCu50. The preparation processes of the extruded tubes were carried out following Example 1.

### Comparative Examples 1 to 4

The alloy components and mass percentages thereof of Examples 2 to 9 are shown in Table 1, in which the alloy element Zn was provided by Zn99.95, and the alloy element Cu was provided by AlCu50. The preparation processes of the extruded tubes were carried out following Example 1.

The extruded tube had a width of 16 mm, a thickness of 1.3 mm, a number of inner holes of 16, and a tube wall thickness of 0.28 mm.

The extrusion processing performance was classified as excellent, medium and low.

The corrosion resistance test of an extruded tube (zinc-free tube, that is, surface of the extruded tube was not subjected to zinc spraying treatment) was carried out on an extruded tube subjected to simulated braze-welding thermal cycle. The simulated braze-welding had a peak temperature of 600°C, and was insolated at the peak temperature for 2min -3min. The corrosion test was carried out according to SWAAT of ASTM G85 standard, in which the salt solution was simulated mixed sea salt with a concentration of 4.2 g/L, and pH value of the solution was adjusted to 2.8-3.0 by acetic acid. A temperature of the saturation tower was set to 57°C, and A temperature of the box body was set to 49°C. A cycle of the test was spraying for 30 minutes + moisturizing at 98%RH or more for 90 minutes. A corrosion penetration time is shown in Table 1.

**TABLE 1 Composition (mass percentage) and Performance of alloys of Examples and Comparative Examples**

| serial number | Si | Fe | Cu | Mn | Zn | Ti | Al | extrusion performance | zinc-free tube corrosion penetration time (days) |
|---|---|---|---|---|---|---|---|---|---|
| Example 1 | 0.03 | 0.11 | - | 0.77 | - | 0.16 | remainder | medium | 36 |
| Example 2 | 0.03 | 0.11 | - | 0.80 | - | 0.10 | remainder | medium | 21 |
| Example 2 | 0.11 | 0.19 | - | 0.82 | - | 0.16 | remainder | low | 24 |
| Example 4 | 0.04 | 0.09 | - | 1.01 | - | 0.14 | remainder | medium | 34 |
| Example 5 | 0.05 | 0.16 | - | 0.78 | - | 0.16 | remainder | excellent | 35 |
| Example 6 | 0.06 | 0.13 | - | 0.30 | - | 0.14 | remainder | excellent | 35 |
| Example 7 | 0.03 | 0.18 | - | 0.80 | - | 0.21 | remainder | low | 32 |
| Example 8 | 0.04 | 0.10 | - | 0.30 | 0.41 | 0.13 | remainder | medium | 32 |
| Example 9 | 0.04 | 0.09 | 0.24 | 0.77 | - | 0.15 | remainder | low | 32 |
| Comparative Example 1 (1197) | 0.03 | 0.11 | 0.47 | 0.14 | - | 0.01 | remainder | excellent | 16 |
| Comparative Example 2 (1100) | 0.12 | 0.33 | 0.17 | - | 0.01 | 0.01 | remainder | excellent | 10 |
| Comparative Example 3 (3102) | 0.07 | 0.23 | 0.01 | 0.36 | 0.01 | 0.01 | remainder | excellent | 10 |
| Comparison Example 4 (3103) | 0.04 | 0.12 | - | 0.95 | 0.01 | 0.01 | remainder | medium | 20 |

**Table 2 Mechanical Properties of Examples and Comparative Examples**

| | extruded tube | | | after simulated braze-welding | | |
|---|---|---|---|---|---|---|
| | tensile strength /MPa | yield strength /MPa | elongation /% | tensile strength /MPa | yield strength /MPa | elongation /% |
| Example 1 | 101 | 92 | 33 | 81 | 23 | 23 |
| Example 2 | 102 | 91 | 33 | 83 | 23 | 24 |
| Example 2 | 115 | 104 | 28 | 102 | 32 | 23 |
| Example 4 | 102 | 95 | 29 | 85 | 30 | 22 |
| Example 5 | 96 | 86 | 35 | 79 | 23 | 27 |
| Example 6 | 71 | 63 | 31 | 65 | 17 | 26 |
| Example 7 | 87 | 79 | 30 | 79 | 22 | 24 |
| Example 8 | 77 | 68 | 32 | 70 | 19 | 26 |
| Example 9 | 96 | 88 | 32 | 88 | 26 | 22 |
| Comparative Example 1 | 96 | 77 | 24 | 73 | 16 | 20 |
| Comparative Example 2 | 90 | 72 | 32 | 73 | 19 | 22 |
| Comparative Example 3 | 90 | 73 | 34 | 73 | 20 | 22 |
| Comparison Example 4 | 99 | 89 | 17 | 85 | 29 | 22 |

It can be seen from Tables 1 and 2 that, the corrosion resistance of the alloy according to Examples of the present disclosure is superior in whole to that of the existing common tube alloy, and the strength of the alloy is similar to that of the existing common tube alloy. The alloys of Examples of the present disclosure improve corrosion resistance of alloy, and meanwhile, extrusion processing performance of the alloys and size design of tube style can be similar to those of the alloys of Comparative Examples.

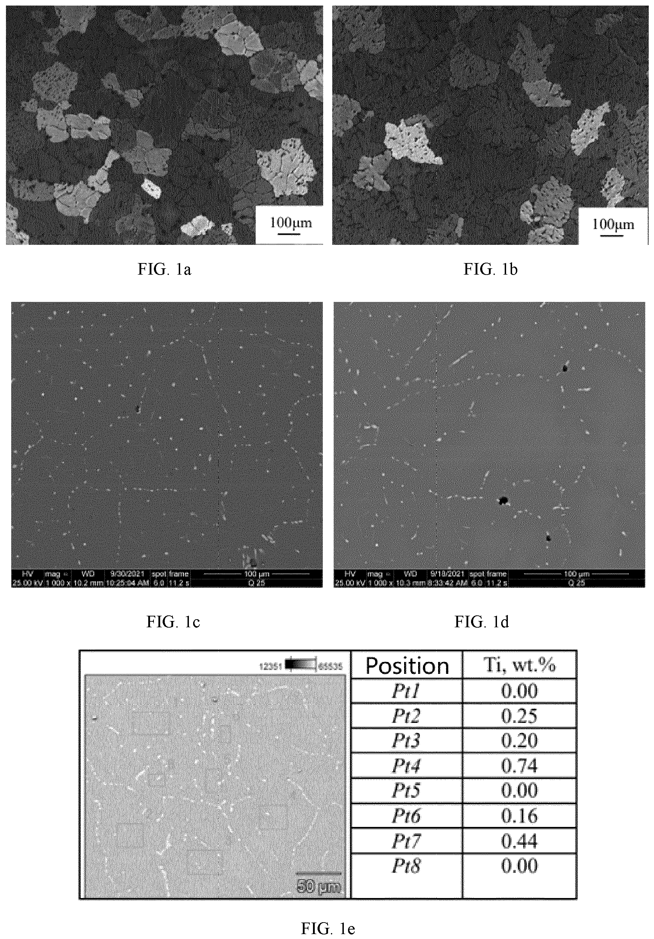

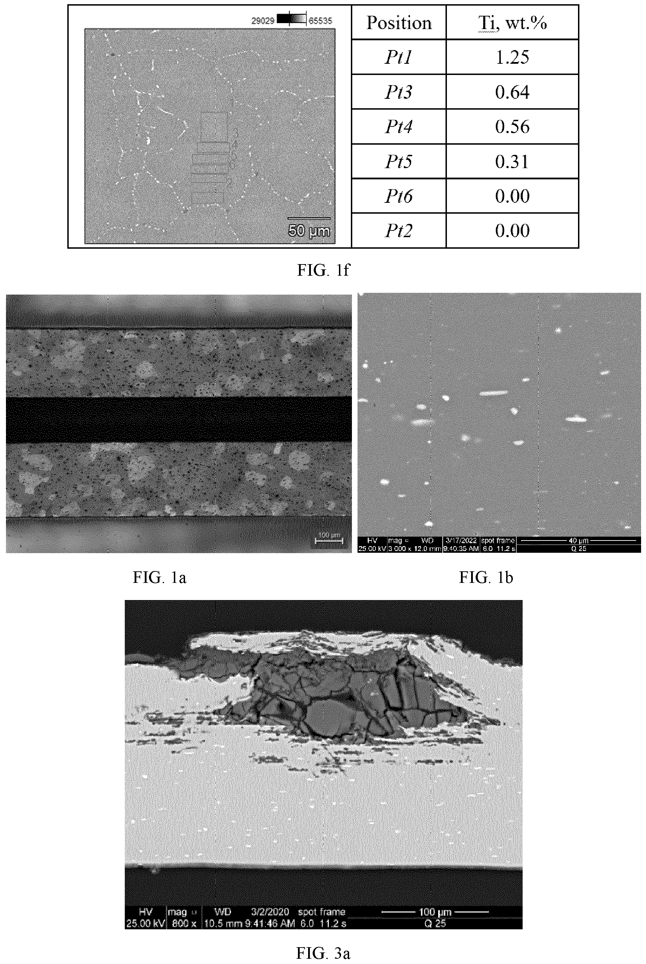

FIGS. 1a-1f show the SEM images of grains and the second phase and the EDS detection results of Ti element content at typical positions of the homogenized ingot in Example 1. FIG. 1a is the SEM image of grains at center (circle center of the circular section and the vicinity thereof, similarly hereinafter). FIG. 1b is the SEM image of grains at radial 1/4 (middle of radius of the circular section radius and the vicinity thereof, similarly hereinafter). FIG. 1c is the SEM image of second phase particles at center. FIG. 1d is the SEM image of second phase particles at radial 1/4. FIG. 1e is the EDS image of Ti element content at center. FIG. 1f is the EDS image of Ti element content at radial 1/4. It can be seen from FIGS. 1a-1f that the homogenized ingot includes mainly the equiaxed grains, and has an average grain size greater than 100µm (at least 40% of the grains, by number, has a maximum size greater than 100µm). The homogenized ingot has fine second phase particles, a part of the second phase particles aggregate at grain boundary, and the second phase particles with a size exceeding 15 µm account for a proportion less than 10% (by number). The homogenized ingot has Ti contents up to 0.74% and 1.25% at part of positions, which are higher than 4 times of the nominal value 0.64%, while Ti at certain part of positions cannot be detected. Such a large difference distribution of Ti content is a foundation of beneficial pitting corrosion resistance effect involved by the ingot of the extruded tube according to the present disclosure.

FIGS. 2a-2b show the SEM images of the grains and the second phase particles of the extruded tube (randomly sampling on wall of the extruded tube, similarly hereinafter) in Example 1. FIG. 2a is the SEM image of the grains of the extruded tube. FIG. 2b is the SEM image of the second phase particles of the extruded tube. It can be seen that the grains of the extruded tube have an average size of about 50 µm. After extrusion, the second phase particles have a tendency of distributing along extrusion processing direction.

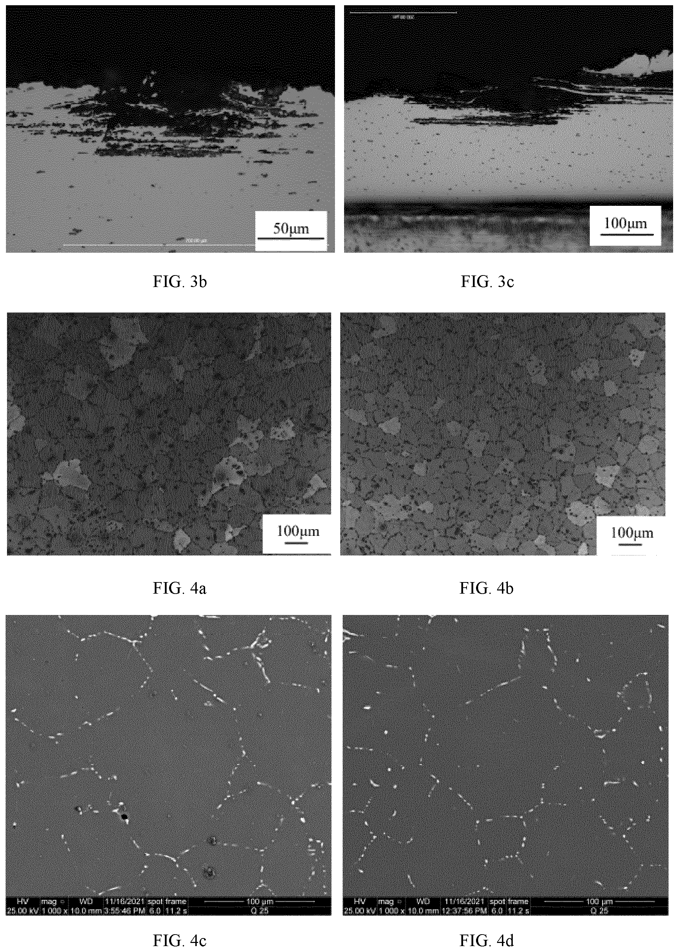

FIGS. 3a-3c show the typical corrosion morphologies of the extruded tube (zinc-free tube), the zinc-sprayed tube ( surface zinc spraying on the extruded tube by an arc zinc spraying with 8±2 g/m²) and the simulated braze-welded zinc-sprayed tube (simulated braze-welding on the zinc-sprayed tube with a peak temperature of 600°C and insolating at the peak temperature for 2min-3min) prepared in Example 1. FIG. 3a is the typical corrosion morphology of the simulated braze-welded zinc-sprayed tube after SWAAT for 4000h. FIG. 3b is the typical corrosion morphology of the zinc-sprayed tube after SWAAT for 3000h. FIG. 3c is the typical corrosion morphology of the zinc-free tube after SWAAT for 4000h. It can be seen that, unlike a common pitting corrosion, the tube material has a tendency that the corrosion shows a multi-level transverse development, such that pitting corrosion resistance of the tube material is improved, and corrosion resistance life of the tube material is effectively prolonged.

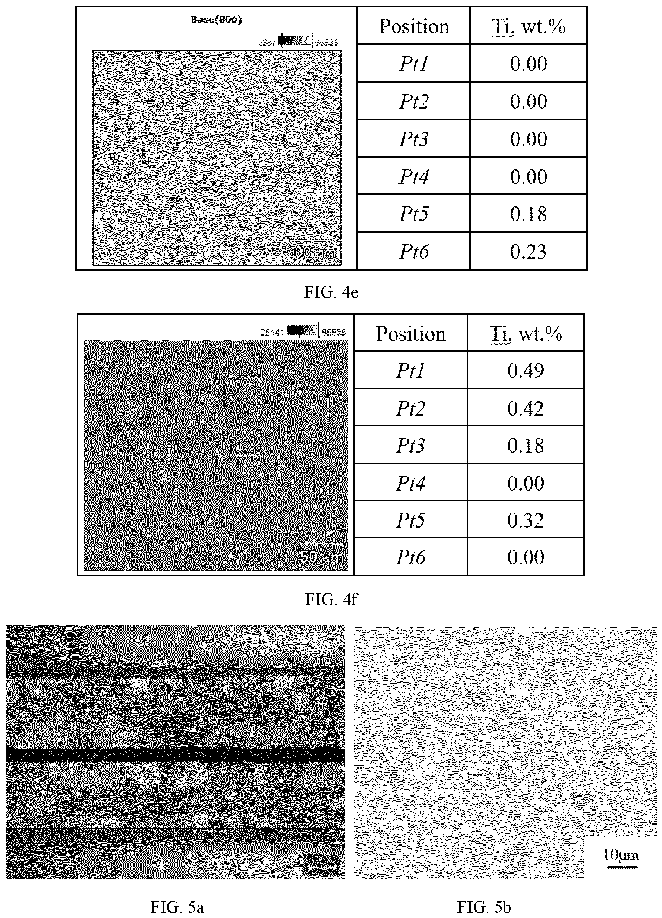

FIGS. 4a-4f show the SEM images of grains and the second phase and the EDS detection results of Ti element content at typical positions of the homogenized ingot in Example 2. FIG. 4a is the SEM image of the grains at center. FIG. 4b is the SEM image of the grains at radial 1/4. FIG. 4c is the SEM image of the second phase particles at center. FIG. 4d is the SEM image of the second phase particles at radial 1/4. FIG. 4e is the EDS image of Ti element content at center. FIG. 4f is the EDS image of Ti element content at radial 1/4. It can be seen that the the homogenized ingot includes mainly the equiaxed grains, and has an average grain size slightly greater than 100µm (at least 40% of the grains, by number, has a maximum size greater than 100µm). The homogenized ingot has fine second phase particles, a part of the second phase particles aggregate at grain boundary, and the second phase particles with a size exceeding 15 µm account for a proportion less than 10% (by number). The homogenized ingot has Ti content up to 0.49% at part of positions, which are higher than 4 times of the nominal value 0.4%, while Ti at certain part of positions cannot be detected. Such a large difference distribution of Ti content is a foundation of beneficial pitting corrosion resistance effect involved by the ingot of the extruded tube according to the present disclosure.

FIGS. 5a-5b show the SEM images of the grains and the second phase particles of the extruded tube in Example 2. FIG. 5a is the SEM image of the grains of the extruded tube. FIG. 5b is the SEM image of the second phase particles of the extruded tube. It can be seen that the grains of the extruded tube are a typical mixed crystal structure. After extrusion, the second phase particles have a tendency of distributing along extrusion processing direction.

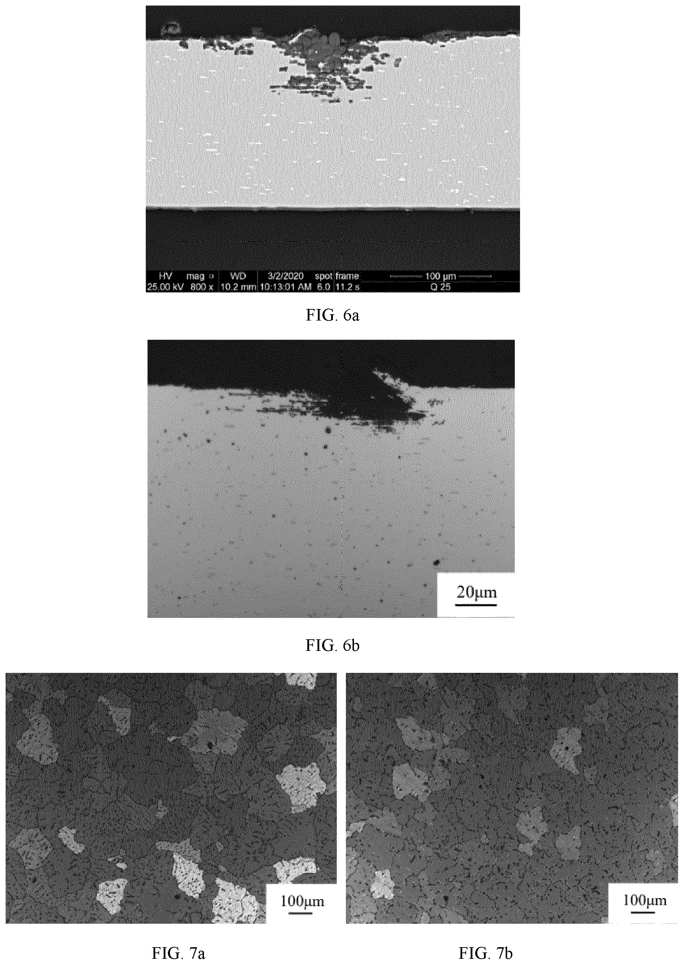

FIGS. 6a and 6b show the typical corrosion morphologies of the extruded tube (zinc-free tube) and the simulated braze-welded zinc-sprayed tube (surface zinc spraying on the extruded tube by an arc zinc spraying with 8±2 g/m² to obtain a zinc-sprayed tube, and simulated braze-welding on the zinc-sprayed tube with a peak temperature of 600°C and insolating at the peak temperature for 2min-3min) prepared in Example 2. FIG. 6a is the typical corrosion morphology of the simulated braze-welded zinc-sprayed tube after SWAAT for 4000h. FIG. 6b is the typical corrosion morphology of the zinc-free tube after SWAAT for 2000h. It can be seen that, unlike a common pitting corrosion, the tube material has a tendency that the corrosion shows a multi-level transverse development, such that pitting corrosion resistance of the tube material is improved, and corrosion resistance life of the tube material is effectively prolonged.

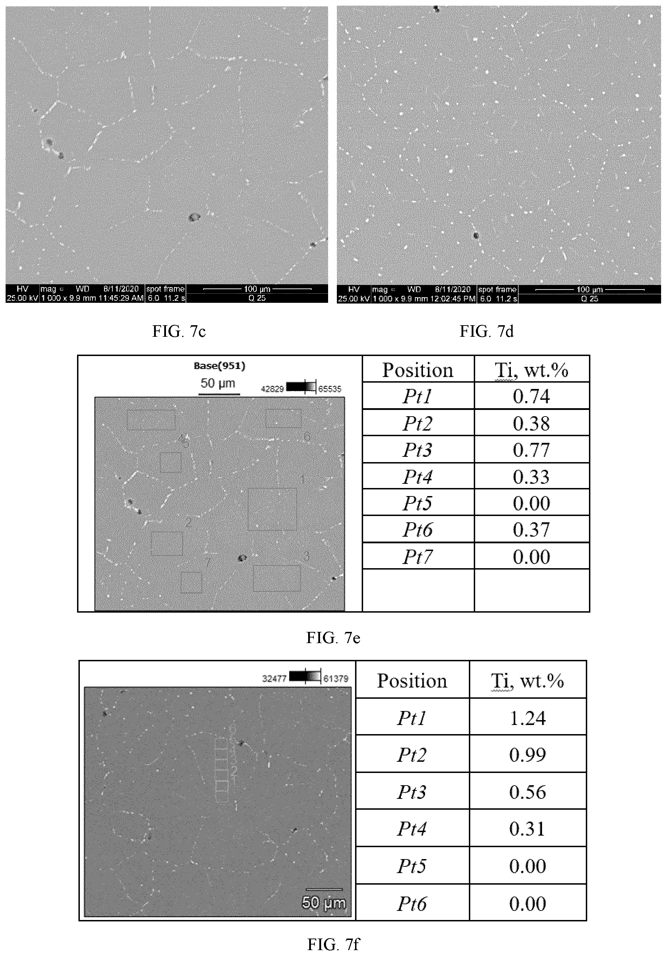

FIGS. 7a-7f show the SEM images of grains and the second phase and the EDS detection results of Ti element content at typical positions of the homogenized ingot in Example 4. FIG. 7a is the SEM image of the grains at center. FIG. 7b is the SEM image of the grains at radial 1/4. FIG. 7c is the SEM image of the second phase particles at center. FIG. 7d is the SEM image of the second phase particles at radial 1/4. FIG. 7e is the EDS image of Ti element content at center. FIG. 7f is the EDS image of Ti element content at radial 1/4. It can be seen that the the homogenized ingot includes mainly the equiaxed grains, and has an average grain size greater than 100µm (at least 40% of the grains, by number, has a maximum size greater than 100µm). The homogenized ingot has fine second phase particles, a part of the second phase particles aggregate at grain boundary, and the second phase particles with a size exceeding 15 µm account for a proportion less than 10% (by number). The homogenized ingot has Ti contents up to 0.77% and 1.24% at part of positions, which are higher than 4 times of the nominal value 0.56%, while Ti at certain part of positions cannot be detected. Such a large difference distribution of Ti content is a foundation of beneficial pitting corrosion resistance effect involved by the ingot of the extruded tube according to the present disclosure.

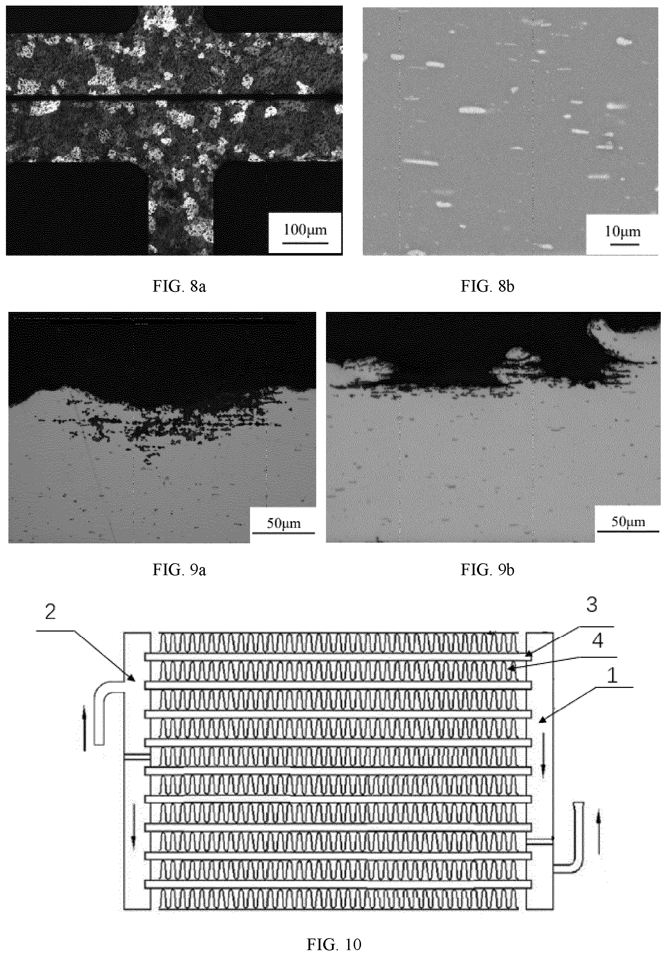

FIGS. 8a-8b show the SEM images of the grains and the second phase particles of the extruded tube in Example 4. FIG. 8a is the SEM image of the grains of the extruded tube. FIG. 8b is the SEM image of the second phase particles of the extruded tube. It can be seen that the grains of the extruded tube have an average size of about 50 µm. After extrusion, the second phase particles have a tendency of distributing along extrusion processing direction.

FIGS. 9a-9b show the typical corrosion morphologies of the zinc-sprayed tube ( surface zinc spraying on the extruded tube by an arc zinc spraying with 8±2 g/m²) prepared in Example 4. FIG. 9a is the typical corrosion morphology of the zinc-sprayed tube after SWAAT for 4000h. FIG. 9b is the typical corrosion morphology of the zinc-sprayed tube after SWAAT for 6000h. It can be seen that, unlike a common pitting corrosion, the tube material has a tendency that the corrosion shows a multi-level transverse development, such that pitting corrosion resistance of the tube material is improved, and corrosion resistance life of the tube material is effectively prolonged.

An embodiment of the present disclosure further provides a heat exchanger using the above heat exchange tube, as shown in FIG. 10, including:
a first tube 1 and a second tube 2;
a heat exchange tube 3, where a plurality of heat exchange tubes 3 are arranged at intervals in length direction of first tube 1, heat exchange tube 3 includes a heat exchange channel extending in length direction thereof, a plurality of heat exchange channels are arranged at intervals in width direction of heat exchange tube 3, heat exchange tube 3 is directly or indirectly connected with first tube 1, and heat exchange tube 3 is directly or indirectly connected with second tube 2; and
a fin 4, where fin 4 is connected with heat exchange tube 3, part of fins 4 are arranged between two adjacent heat exchange tubes 3 in length direction of first tube 1, and there are a plurality of fins 4.

In some embodiments, heat exchange tube 3 is a flat tube.

In some embodiments, first tube 1 is a first collecting tube, and second tube 2 is a second collecting tube.

In some embodiments, surface of heat exchange tube 3 is arc-sprayed with zinc or precoated with flux containing zinc. When heat exchange tube 3 is braze-welded with other components of the heat exchanger, the zinc preset on surface of the heat exchange tube diffuses from surface to the interior to form a concentration gradient, that is, a corrosion potential distribution from low to high would be presented from the surface layer to the inner layer of the heat exchange tube, so as to effectively prolong corrosion resistance life of the heat exchange tube.

By using the above heat exchange tube, the heat exchanger according to an embodiment of the present disclosure is corrosion-resistant and has a long service life.

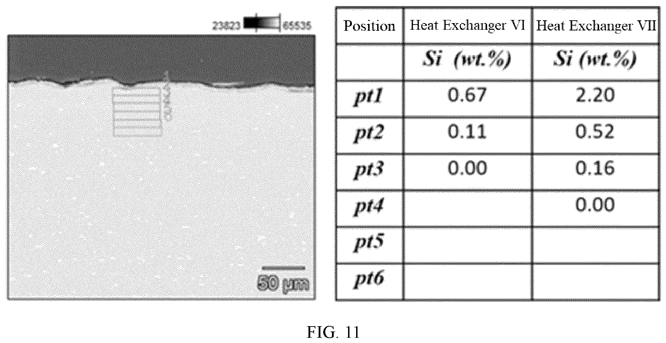

The alloy of Example 4 was selected and made into flat tubes, then combined with the collecting tube and the fin to prepare heat exchangers VII and VI as shown in FIG. 10. The difference between heat exchangers VII and VI is that furnace welding core of heat exchanger VII adopted a higher furnace parameter than that of heat exchanger VI, such as its furnace temperature was set to be 10°C higher than that of heat exchanger VI. FIG. 11 shows diffusion of Si element of a typical flat tube in a position closed to a collecting tube of finless region between the collecting tube and the fin on the cores of heat exchangers VI and VII detected by SEM&EDS. It can be seen from FIG. 11 that surface layer Si content of the flat tube closed to the collecting tube of heat exchanger VII is significantly higher than that of heat exchanger VI, and Si diffusion depth of the flat tube of heat exchanger VII is about 30 µm, while Si diffusion depth of the flat tube of heat exchanger VI is about 20 µm. When SWAAT test was carried out with a box body temperature of 49°C, inlet and outlet tubes were protected by an electrical adhesive tape during the test. There was leakage occurred on the flat tube closed to the collecting tube of 5 samples of heat exchanger VII after testing for 2500h, while there was no leakage occurred on all 5 samples of heat exchanger VI after testing for 3000h.

It should be noted that, in this disclosure, relational terms such as "first" and "second" are merely used to distinguish one entity or unit from another entity or unit, and do not necessarily require or imply that there is any such actual relationship or order between these entities or units. In this specification, "a plurality of" means at least two unless specifically defined otherwise.

In the present disclosure, the terms "one embodiment", "some embodiments", "example", "specific example", or "some examples" and the like mean that a specific feature, structure, material, or characteristic described in connection with the embodiment or example is included in at least one embodiment or example of the present disclosure. In the specification, the schematic description of the above-described terms is not necessary to refer to the same embodiment or example. In addition, the described specific features, structures, materials, or characteristics described can be combined in an appropriate way in any one or more embodiments or examples. In addition, those skilled in the art may combine and associate different embodiments or examples described in this specification and features of different embodiments or examples, without conflicting with each other.

Although embodiments of the present disclosure have been shown and described above, it can be understood that the above embodiments are exemplary and should not be interpreted as limitation to the present disclosure, and those skilled in the art can make variations, modifications, substitutions and variations on the above embodiments within the scope of the present disclosure.

## Claims

1. An aluminum alloy core material for heat exchanger, comprising an aluminum alloy material, wherein the aluminum alloy material comprises, by mass percentage, Mn: 0.20%-1.20%, Fe: 0.08%-0.25%, Ti: 0.08%-0.25%, Si: 0.03%-0.12%, Cu: 0%-0.35%, Zn: 0%-3.0%, Zr: 0%-0.4%, V: 0%-0.4%, Cr: 0%-0.5%, and RE: 0%-0.5%, and a remainder of aluminum and inevitable impurities, wherein RE is a rare earth element; the aluminum alloy core material comprises a plurality of first unit bodies, a plurality of second unit bodies, and a plurality of third unit bodies, the first unit bodies, the second unit bodies and the third unit bodies have the same volumes, an average value of Ti content of the first unit body is greater than or equal to 4 times of a nominal value of Ti content of the aluminum alloy core material, an average value of Ti content of the second unit body is less than 0.02%, and an average value of Ti content of the third unit body is greater than the average value of Ti content of the second unit body and less than the average value of Ti content of the first unit body.

2. The aluminum alloy core material for heat exchanger according to claim 1, wherein orthographic projections of the first unit body and at least one second unit body on first plane or second plane at least partially overlap, wherein the first plane is parallel to horizontal plane, and the second plane has an angle α with the first plane, where 0°< α ≤ 90°.

3. The aluminum alloy core material for heat exchanger according to claim 1, wherein a content of Ti in the aluminum alloy material is, by mass percentage, 0.10%-0.20%.

4. The aluminum alloy core material for heat exchanger according to claim 1, wherein in grain structure of the aluminum alloy core material, a proportion of equiaxed grain is greater than or equal to 90% by number, and in the equiaxed grain, at least 40% grain have a maximum size greater than 100 µm.

5. The aluminum alloy core material for heat exchanger according to claim 1, wherein there is a dispersed second phase particle mixed in the aluminum alloy core material, and at least 90% by number of the second phase particle has a maximum size less than 15 µm.

6. A method for preparing the aluminum alloy core material for heat exchanger according to any one of claims 1 to 5, comprising: providing materials for the aluminum alloy material depending on components and weight percentages thereof; and carrying out semi-continuous ingot casting and homogenization to obtain the aluminum alloy core material, where the homogenization has a temperature of 550°C-630°C and a duration of 1h-8h.

7. A heat exchange tube, comprising: a tube wall and at least one heat exchange channel, wherein, the heat exchange channel extends in length direction of the heat exchange tube, and the tube wall surrounding the heat exchange channel has a core material comprising the aluminum alloy core material according to any one of claims 1 to 5.

8. The heat exchange tube according to claim 7, wherein the heat exchange tube is prepared from the aluminum alloy core material according to any one of claims 1 to 5 by a method comprising an extrusion process, wherein an extrusion ratio of the extrusion process is greater than or equal to 50.

9. The heat exchange tube according to claim 7 or 8, wherein the heat exchange tube comprises a solder layer, wherein the solder layer is an Al-Si matrix alloy, the solder layer forms a diffusion layer by silicon diffusion during braze-welding, and a thickness of the diffusion layer is less than or equal to 20% of a thickness of the tube wall.

10. A heat exchanger comprising the heat exchanger tube according to any one of claims 7 to 9; wherein the heat exchanger comprises:
a first tube and a second tube; and
a heat exchange tube, wherein a plurality of heat exchange tubes are arranged at intervals in length direction of the first tube, the heat exchange tube comprises a heat exchange channel extending in length direction thereof, a plurality of heat exchange channels are arranged at intervals in width direction of the heat exchange tube, the heat exchange tube is directly or indirectly connected with the first tube, and the heat exchange tube is directly or indirectly connected with the second tube.

11. The heat exchanger according to claim 10, further comprising a fin,
wherein the fin is connected with the heat exchange tube, part of fins are arranged between two adjacent heat exchange tubes in length direction of the first tube, and there are a plurality of fins; and
wherein a material of the fin is aluminum alloy, and a corrosion potential of the fin is not higher than that of the heat exchange tube.
